# EUROPÄISCHE PATENTSCHRIFT

(11) **EP 4 272 227 B1**
(45) Veröffentlichungstag und Bekanntmachung des Hinweises auf die Patenterteilung: **09.07.2025**
(21) Anmeldenummer: 22712257.9
(22) Anmeldetag: 22.02.2022
(51) Int. Cl.: G21C 3/352, G21C 3/334, G21F 5/012

(54) **ERTÜCHTIGUNG VON BRENNELEMENTEN VON KERNKRAFTWERKEN**
STRENGTHENING OF FUEL ASSEMBLIES OF NUCLEAR POWER PLANTS
RENFORCEMENT D'ENSEMBLES COMBUSTIBLES DE CENTRALES NUCLÉAIRES

(30) Priorität: 09.03.2021 DE 102021105573; 10.03.2021 DE 102021105838
(43) Veröffentlichungstag der Anmeldung: 08.11.2023
(73) Patentinhaber: RWE Nuclear GmbH, 45141 Essen (DE)
(72) Erfinder: SCHUBERT, Thomas, 59494 Soest (DE)
(74) Vertreter: Schwenderling, Jens
(86) Internationale Anmeldenummer: PCT/EP2022/054320
(87) Internationale Veröffentlichungsnummer: WO 2022/189132

(56) Entgegenhaltungen:
- WO-A1-2020/120648
- WO-A1-2020/173506
- DE-A1- 102009 046 668
- DE-A1- 3 320 071
- DE-U1- 29 521 378

## Beschreibung

Gegenstand der vorliegenden Erfindung ist ein Verfahren zum Ertüchtigen von Brennelementen für einen Kernreaktor, insbesondere für einen Siedewasserreaktor.

Bei Druckwasser und Siedewasserreaktoren sind die Brennelemente üblicherweise als Bündel von einzelnen Brennstäben aufgebaut, die das spaltbare Material umfassen. Hierbei ist es wichtig, dass die Position der einzelnen Brennstäbe innerhalb eines Brennelements genau definiert ist, um so eine Annäherung einzelner Brennstäbe an benachbarte Brennstäbe mit einer entsprechend sich ändernden Kritikalität zu verhindern. Die Brennelemente sind im Reaktor in bestimmten Aufnahmebehältern, so genannte Brennelementkästen, aufgenommen. Die Bestückung dieser Aufnahmebehälter wird beispielsweise in der WO 2020/120648 A1 beschrieben. Im Laufe des Betriebes des Reaktors kommt es insbesondere bei Siedewasserreaktoren u.a. zu einer Oxidation des Strukturmaterials und der Brennstäbe und damit zu einem Wachstum des Materialien. Die Brennstäbe sind einerseits über Abstandshalter miteinander verbunden, die die Einhaltung der notwendigen Abstände benachbarter Brennstäbe gewährleisten. Andererseits sind die Brennstäbe in eine Tragstruktur eingeschoben, um endständig eine Positionierung der Brennstäbe zu ermöglichen. Grundsätzlich sind die Brennstäbe nicht mit dieser Tragstruktur stoffschlüssig, formschlüssig oder kraftschlüssig verbunden, jedoch mit den Abstandshaltern. Dies führt dazu, dass die Brennelemente und damit die Brennstäbe einfach wieder aus den Brennelementkästen und der Tragstruktur herausziehbar sein sollten. Jedoch bewirkt die Oxidation sowie die Bestrahlung im Betrieb ein Wachstum der Brennstäbe, der Abstandshalter und der Brennelementkästen. Ein teilweise unterschiedliches Wachstum, insbesondere in einer Ebene quer zur Einschubs- und Auszugsrichtung in den Brennelementkasten, kann dazu führen, dass nach einer gewissen Betriebsdauer der Brennelemente ein Herausziehen nicht zerstörungsfrei möglich ist. Es können einzelne oder alle Brennelemente in dem Brennelementkasten klemmen und die Abstandshalter deshalb beim Herausziehen beschädigt werden.

Dies führt dazu, dass nach dem Herausziehen der Brennelemente aus dem Brennelementkasten Abstandhalter beschädigt oder verschoben sein können und diese ihre Funktion nicht mehr zuverlässig erfüllen. Müssen nun die Brennelemente in einen Transportbehälter, beispielsweise in einen CASTOR-Behälter verbracht und in diesem zu einer Aufbereitungsanlage, einem Zwischen- oder Endlager transportiert werden, kann daher nicht davon ausgegangen werden, dass die Brennelemente störfallsicher sind, da gewährleistet sein muss, dass auch bei einem Störfall, also beispielsweise bei einem Sturz des CASTOR-Behälters der Abstand der Brennstäbe zueinander sicher gewährleistet ist.

Bisher wurde hierzu eine so genannte Umskelletierung vorgenommen, bei der die bestehenden Abstandshalter ersetzt werden. Dies stellt jedoch einen erheblichen Aufwand dar und ist mit einem erheblichen Einsatz von menschlicher Arbeitskraft verbunden, da die ursprünglichen Abstandshalter beziehungsweise Tragstrukturen mechanisch unter Berücksichtigungen der entsprechenden Vorschriften für die Arbeit mit radioaktiven Stoffen entfernt und durch neue ersetzt werden müssen. Zudem führt dies auch zu einer erhöhten Strahlendosis (Kollektivdosis), der die entsprechenden Arbeitskräfte ausgesetzt sind.

DE102009046668A1 ist ein weiteres relevantes Dokument.

Hiervon ausgehend liegt der vorliegenden Erfindung die Aufgabe zugrunde, die aus dem Stand der Technik bekannten Nachteile zumindest teilweise zu überwinden.

Die Aufgabe wird gelöst mit den Merkmalen des unabhängigen Anspruchs. Die abhängigen Ansprüche sind auf vorteilhafte Weiterbildungen gerichtet.

Das erfindungsgemäße Verfahren zum Ertüchtigen eines bestehenden Brennelements für Kernreaktoren, insbesondere Siedewasserreaktoren, zum Transport und/oder zur Lagerung, wobei das Brennelement aus einer Mehrzahl von Brennstäben ausgebildet ist, die sich in einer Längsrichtung erstrecken, wobei die Brennstäbe in einer Ebene senkrecht zur Längsrichtung in Reihen und Spalten angeordnet sind, wobei die Spalten in einer ersten Querrichtung angeordnet sind, die sich senkrecht zur Längsrichtung erstreckt und die Reihen in einer zweiten Querrichtung angeordnet sind, die sich senkrecht zur Längsrichtung und senkrecht zur ersten Querrichtung erstreckt, wobei das Brennelement mit einem ersten Ertüchtigungsstruktursegment und einem zweiten Ertüchtigungsstruktursegment zum Lagern der Brennstäbe versehen wird, wobei das erste Ertüchtigungsstruktursegment aus einem ersten Grundkörper und mehreren ersten Unterstützungsstrukturen ausgebildet ist, die sich zueinander parallel im rechten Winkel vom ersten Grundkörper erstrecken, wobei das zweite Ertüchtigungsstruktursegment aus einem zweiten Grundkörper und mehreren zweiten Unterstützungsstrukturen ausgebildet ist, die sich zueinander parallel im rechten Winkel vom zweiten Grundkörper erstrecken, umfasst die folgenden Schritte:
a) Festlegen einer ersten Position in Längsrichtung zur Lagerung der Brennstäbe;
b) Einbringen eines ersten Ertüchtigungsstruktursegmentes an der ersten Position, wobei die ersten Unterstützungsstrukturen in der ersten Querrichtung zwischen die Brennstäbe geschoben werden und Einbringen eines weiteren ersten Ertüchtigungsstruktursegmentes an der ersten Position, wobei die ersten Unterstützungsstrukturen entgegen der ersten Querrichtung zwischen die Brennstäbe geschoben werden;
c) Einbringen eines zweiten Ertüchtigungsstruktursegmentes an der ersten Position, wobei die zweiten Unterstützungsstrukturen in der zweiten Querrichtung zwischen die Brennstäbe geschoben werden und Einbringen eines weiteren zweiten Ertüchtigungsstruktursegmentes an der ersten Position, wobei die zweiten Unterstützungsstrukturen entgegen der zweiten Querrichtung zwischen die Brennstäbe geschoben werden.

Die Grundkörper und Unterstützungsstrukturen sind bevorzugt aus einem Metall ausgebildet, insbesondere aus einer Nickel-Chrom-Eisen-Molybdän-Legierung, beispielsweise einer Legierung, die unter der Bezeichnung Alloy 718 vertrieben wird, oder einer Zirkoniumlegierung. Die Grundkörper und Unterstützungsstrukturen sind insbesondere aus Blech ausgebildet. Alternativ können die Grundkörper und die Unterstützungsstrukturen durch ein additives Fertigungsverfahren ausgebildet werden.

Die jeweiligen Unterstützungsstrukturen sind bevorzugt äquidistant auf dem jeweiligen Grundkörper angeordnet, wobei der jeweilige Abstand dem Abstand benachbarter Brennstäbe entspricht. Die Unterstützungsstrukturen können unterschiedliche Längen aufweisen, insbesondere um beispielsweise eventuell Wasserstäbe, die üblicherweise einen größeren Durchmesser als Brennstäbe aufweisen, aussparen zu können.

Bevorzugt können in den ersten Unterstützungsstrukturen Ausnehmungen ausgebildet sein, durch die die zweiten Unterstützungsstrukturen durchgeführt werden können. In einem solchen Beispiel wird daher der Schritt b) zwingend vor Schritt c) durchgeführt. Durch das Einbringen von Ertüchtigungsstruktursegmenten ist es auf einfache Art möglich, Brennelemente mit zerstörten, abgerissenen oder verschobenen Abstandshaltern zu ertüchtigen, ohne eine vollständige Umskelletierung der Brennelemente vornehmen zu müssen.

Das Einbringen der Ertüchtigungsstruktursegmente ist einfach und reibungsarm möglich, ohne dass bestehende z.B. verschobene Abstandshalter mechanisch entfernt werden müssen. Diese können in den Brennelementen verbleiben. Die sichere Lagerung der Brennstäbe ist unabhängig vom Zustand der ursprünglichen Abstandshalter durch die Ertüchtigungsstruktursegmente gegeben.

Gemäß einer vorteilhaften Ausgestaltung wird mindestens eine von der ersten Position verschiedene zweite Position in Längsrichtung zur Lagerung der Brennstäbe festgelegt und die Schritte b) und c) werden an den jeweiligen zweiten Positionen durchgeführt.

So können auf einfache Art mehrere zerstörte, abgerissene oder verschobene Abstandshalter ertüchtigt werden.

Gemäß einer vorteilhaften Ausgestaltung weist das bestehende Brennelement in Längsrichtung Sollpositionen für Abstandshalter auf und die erste Position wird an einer Sollposition oder unmittelbar in Längsrichtung benachbart zu einer Sollposition festgelegt. Weiterhin vorteilhaft weist das bestehende Brennelement in Längsrichtung Sollpositionen für Abstandshalter auf und die zweite Position wird an einer Sollposition oder unmittelbar in Längsrichtung benachbart zu einer Sollposition festgelegt.

Die Sollpositionen der Abstandshalter werden üblicherweise bei Auslegung des Brennelements festgelegt. Die Sollpositionen der Abstandshalter werden dabei so festgelegt, dass das Brennelement störfallsicher ist, also beispielsweise ein Sturz des Brennelements nicht zu einer Relativbewegung zwischen einzelnen Brennstäben kommt. Ist beim Herausziehen des Brennelements aus dem Brennelementkasten mindestens ein Abstandshalter beschädigt, zerstört, abgerissen oder verschoben, ist eine Lagerung der Brennstäbe an der entsprechenden mindestens einen Sollposition nicht mehr gewährleistet, so dass auch die Störfallsicherheit nicht mehr gewährleistet werden kann.

Hier werden nun bei abgerissenen oder verschobenen Abstandshaltern an den entsprechenden Sollpositionen Ertüchtigungsstruktursegmente eingeführt, um die entsprechende Lagerung und damit die Störfallsicherheit wiederherzustellen. Hier entspricht dann die erste und/oder zweite Position jeweils einer Sollposition.

Ist mindestens ein Abstandshalter beschädigt oder zerstört, so wird die erste und/oder die zweite Position so gewählt, dass sie unmittelbar in Längsrichtung benachbart zu jeweils einer Sollposition sind. Hierunter wird verstanden, dass die erste und/oder zweite Position nahestmöglich an eine Sollposition gelegt wird, insbesondere so, dass die Ertüchtigungsstruktursegmente in Längsrichtung an dem entsprechenden Abstandshalter anliegen oder zwischen dem Abstandshalter und den Ertüchtigungsstruktursegementen in Längsrichtung ein Abstand von höchstens 25 mm vorliegt. Hierdurch kann die sichere Lagerung der Brennstäbe und damit die Störfallsicherheit gewährleistet werden.

Gemäß einer vorteilhaften Ausgestaltung weisen die ersten Unterstützungsstrukturen Ausnehmungen auf, durch die die zweiten Unterstützungsstrukturen beim Einschieben hindurchdringen. Dies ermöglicht eine Stabilisierung der ersten und zweiten Ertüchtigungsstruktursegmente und damit eine Stabilisierung des Brennelements in diesem Bereich. Hierdurch können Kräfte, die in das Brennelement eingeleitet werden, beispielsweise durch eine seitliche Lagerung oder einen Sturz, besser aufgenommen werden.

Gemäß einer vorteilhaften Ausgestaltung weisen die ersten Ertüchtigungsstruktursegmente und/oder die zweiten Ertüchtigungsstruktursegmente Abweiserfahnen auf, die am jeweiligen Grundkörper, insbesondere an der oberen und/oder unteren Seite, jeweils betrachtet in Längsrichtung, ausgebildet sind. Diese ermöglichen eine einfache Wiederbekastung, bei der das Brennelement nach Ertüchtigung wieder in einen Brennelementkasten eingeführt wird. Bevorzugt sind die Abweiserfahnen in Form von Metallzungen am Grundkörper ausgebildet. Beim Einführen in den Brennelementkasten liegen die Abweiserfahnen an der Innenseite des Brennelementkastens an und führen zu einer Zentrierung des Brennelementes beim Einschieben, so dass ein Verkanten beim Einführen sicher vermieden wird.

Gemäß einer vorteilhaften Ausgestaltung weist der erste Grundkörper erste Schnappmittel auf, die beim Einschieben des ersten Ertüchtigungsstruktursegments eine Schnappverbindung mit Brennstäben eingehen. So kann eine einfache Fixierung des ersten Ertüchtigungsstruktursegments am Brennelement erreicht werden. Bevorzugt erfolgt die Schnappverbindung mit den jeweils äußeren Brennstäben.

Gemäß einer vorteilhaften Ausgestaltung weist der zweite Grundkörper zweite Schnappmittel auf, die beim Einschieben des zweiten Ertüchtigungsstruktursegments eine Schnappverbindung mit Brennstäben eingehen. So kann eine einfache Fixierung des zweiten Ertüchtigungsstruktursegments am Brennelement erreicht werden. Bevorzugt erfolgt die Schnappverbindung mit den jeweils äußeren Brennstäben.

Gemäß einer vorteilhaften Ausgestaltung werden Distanzbleche an Brennstäben fixiert, die eine Verschiebung der Ertüchtigungsstruktursegmente in Längsrichtung, insbesondere beim Wiederbekasten, verhindern. Bevorzugt werden zwei Distanzbleche zwischen Ertüchtigungsstruktursegmenten sowie in der Tragstruktur fixierten Abstandhaltern gesetzt, die eine Verringerung der Distanz zwischen Ertüchtigungsstrukturen und gegebenenfalls Abstandshaltern verhindern. So kann eine Lagerung der Brennstäbe des Brennelements erreicht werden, die auch im Störfall eine Annäherung von Brennstäben an benachbarte Brennstäbe sicher unterbindet.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1 eine perspektivische Ansicht eines Beispiels eines ersten Ertüchtigungsstruktursegments;
Fig. 2 eine perspektivische Ansicht eines Beispiels eines zweiten Ertüchtigungsstruktursegments;
Fig. 3 einen Querschnitt eines Beispiels eines Brennelementes im ursprünglichen Abstandhalter;
Fig. 4 eine perspektivische Ansicht der Beispiele der ersten und zweiten Ertüchtigungsstruktursegmente; und
Fig. 5 eine perspektivische Ansicht eines Brennelementes mit montierten Ertüchtigungsstruktursegmenten.

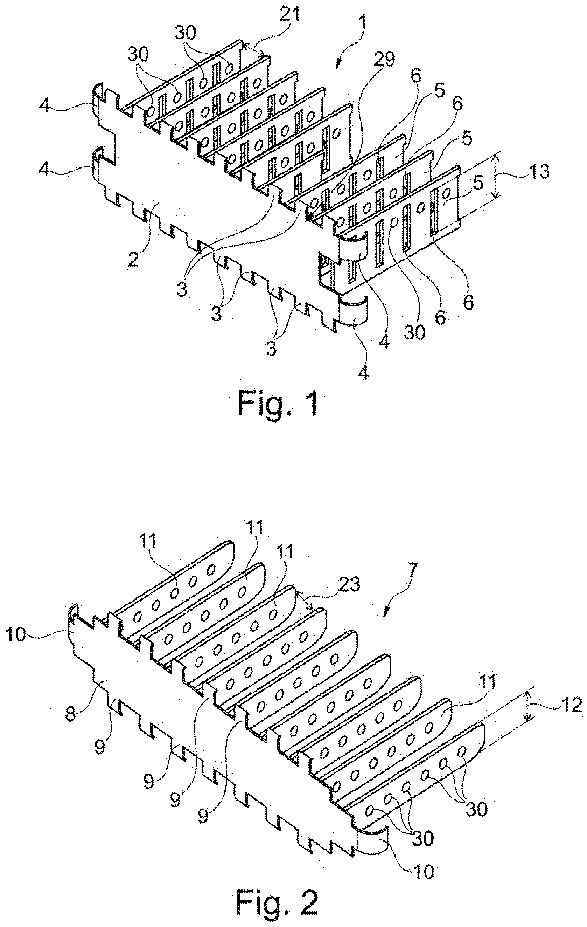

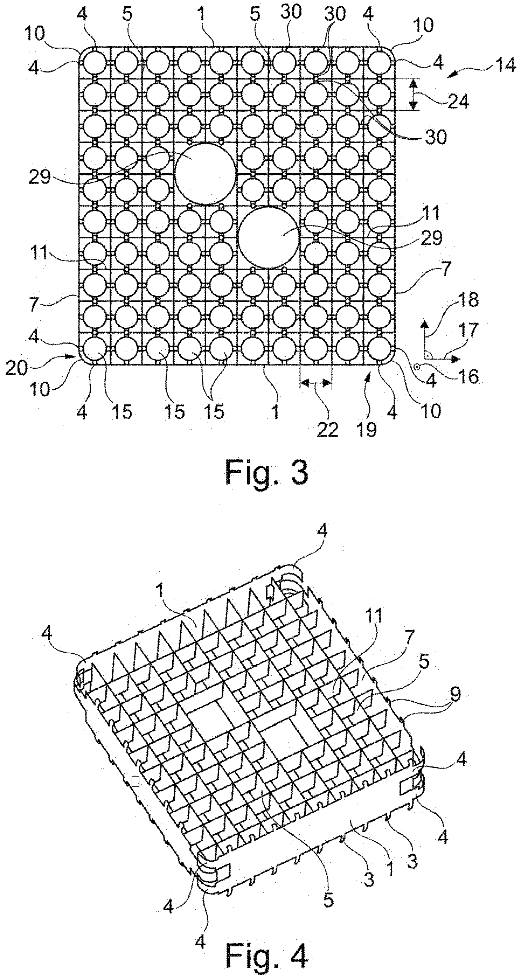

Fig. 1 zeigt schematisch ein Beispiel einer ersten Ertüchtigungsstruktursegments 1. Diese umfasst einen ersten Grundkörper 2 mit ersten Abweiserfahnen 3 und ersten Schnappmitteln 4. Eine Mehrzahl von ersten Unterstützungsstrukturen 5, die in diesem Beispiel als Bleche ausgebildet sind, erstreckt sich von einer ersten Seite 29 des ersten Grundkörpers 2 weg. Jede erste Unterstützungsstruktur 5 weist einen rechten Winkel mit dem ersten Grundkörper 2 auf, so dass die ersten Unterstützungsstrukturen 5 parallel zueinander sind. In jeder ersten Unterstützungsstruktur 5 sind Ausnehmungen 6 ausgebildet, die ausgerichtet sind, so dass ein Element wie beispielsweise ein Blech parallel zum ersten Grundkörper 2 durch die Ausnehmungen 6 der ersten Unterstützungsstrukturen 5 geschoben werden können. Weiterhin weisen die ersten Unterstützungstrukturen 5 Noppen 30 auf, die im verbauten Zustand die Brennstäbe des Brennelementes klemmen, wie insbesondere auch Fig. 3 zeigt. Der Übersichtlichkeit halber sind nicht alle Noppen 30 mit Bezugszeichen versehen. Die ersten Abweiserfahnen 3 erstrecken sich zunächst vom ersten Grundkörper 2 weg und sind dann in Richtung der ersten Unterstützungsstrukturen 5 gebogen. Hierdurch erleichtern sie das Zentrieren des Brennelementes beim Einkasten in einen Brennelementkasten.

Fig. 2 zeigt schematisch ein Beispiel eines zweiten Ertüchtigungsstrugkursegments 7. Diese weist einen zweiten Grundkörper 8 auf mit zweiten Abweiserfahnen 9 und zweiten Schnappmitteln 10. Vom zweiten Grundkörper 8 erstreckt sich eine Mehrzahl von zweiten Unterstützungsstrukturen 11 weg. Jede zweite Unterstützungsstruktur 11 weist einen rechten Winkel mit dem zweiten Grundkörper 8 auf, so dass die zweiten Unterstützungsstrukturen 11 sich parallel zueinander erstrecken. Die zweiten Unterstützungsstrukturen 11 weisen eine Höhe 12 auf, die kleiner ist als die entsprechende Erstreckung 13 der Ausnehmungen 6 der ersten Unterstützungsstrukturen 5, so dass die zweiten Unterstützungsstrukturen 11 durch die Ausnehmungen 6 der ersten Unterstützungsstrukturen 5 geschoben werden können. Auch die zweiten Unterstützungsstrukturen 11 weisen entsprechende Noppen 30 auf. Der Übersichtlichkeit halber sind nicht alle Noppen 30 mit Bezugszeichen versehen. Die zweiten Abweiserfahnen 9 erstrecken sich zunächst vom zweiten Grundkörper 10 weg und sind dann in Richtung der zweiten Unterstützungsstrukturen 11 gebogen. Hierdurch erleichtern sie das Zentrieren des Brennelementes beim Einkasten in einen Brennelementkasten.

Fig. 3 zeigt schematisch ein Brennelement 14 für einen Siedewasserreaktor im Querschnitt mit einer Mehrzahl von Brennstäben 15, die in einem Raster mit einer Länge und Breite von jeweils zehn Brennstäben 15 angeordnet sind. Das Brennelement 14 weist ferner zwei Wasserstäbe 29 auf. Zum einfacheren Verständnis werden im Rahmen dieses Dokumentes die folgenden Richtungsdefinitionen verwendet. Die Richtung, in der sich die Brennstäbe 15 erstrecken, wird als Längsrichtung 16 bezeichnet. Alle Brennstäbe 15 sind parallel in der Längsrichtung 16 ausgerichtet. Weiterhin werden eine zweite Querrichtung 17 und eine erste Querrichtung 18 definiert. Jede Querrichtung 17, 18 ist dabei senkrecht zur Längsrichtung 16 und senkrecht zur anderen Querrichtung 18, 17 ausgerichtet, so dass ein dreidimensionales kartesisches Koordinatensystem entsteht.

Das Brennelement 14 weist ein Raster aus Spalten 19 und Zeilen 20 an Brennstäben 15 aufweist. Jede Zeile 20, die nur exemplarisch mit einem Bezugszeichen versehen sind, erstreckt sich dabei in der zweiten Querrichtung 17 und jede Spalte 19, die ebenfalls der Übersichtlichkeit halber nur teilweise mit Bezugszeichen versehen sind, in der ersten Querrichtung 18. Das Brennelement 14 weist also jeweils zehn Reihen 20 und zehn Spalten 19 an Brennelementen auf, die durch die Wasserstäbe 29 unterbrochen werden.

Zur Ertüchtigung des Brennelements 14 sind im Bereich des Querschnitts jeweils zwei erste Ertüchtigungsstruktursegmente1 und zwei zweite Ertüchtigungsstruktursegmente 7 mit ihren Unterstützungsstrukturen 5, 11 jeweils zwischen benachbarte Brennstäbe 15 eingeführt, so dass sich die ersten Unterstützungsstrukturen 5 in der ersten Querrichtung 18 und die zweiten Unterstützungsstrukturen 11 in der zweiten Querrichtung 19 erstrecken.

Beim Einbringen der Ertüchtigungsstruktursegmente 1 und 7 wird zunächst eine erstes Ertüchtigungsstruktursegment 1 mit den entsprechenden ersten Unterstützungsstrukturen 5 von außen in der ersten Querrichtung 18 zwischen die Brennstäbe 15 geschoben und dann ein weiteres erstes Ertüchtigungsstruktursegment 1 mit den entsprechenden ersten Unterstützungsstrukturen 5 entgegen der ersten Querrichtung 18 von außen zwischen die Brennstäbe 15 geschoben. Nachfolgend werden erst ein zweites Ertüchtigungsstruktursegment 7 in der zweiten Querrichtung 17 eingeschoben, so dass zwischen den Brennstäben 15 die zweiten Unterstützungsstrukturen 11 eingeschoben werden und dabei die Ausnehmungen 6 der ersten Unterstützungsstrukturen 5 durchdringen und dann ein weiteres zweites Ertüchtigungsstruktursegment 7 entgegen der zweiten Querrichtung 17 eingeschoben, so dass zwischen den Brennstäben 15 die zweiten Unterstützungsstrukturen 11 eingeschoben werden und dabei die die Ausnehmungen 6 der ersten Unterstützungsstrukturen 5 durchdringen. Die Anzahl der Unterstützungsstrukturen 5, 11 ist dabei bevorzugt so gewählt, dass sie um eins kleiner ist als die entsprechende Anzahl an Spalten 19 bzw. Zeilen 20 des Brennelements 14, so dass gewährleistet ist, dass jeweils zwischen zwei Brennstäben 15 des Brennelements 14 Unterstützungsstrukturen 5, 11 positioniert werden können. Ein erster Abstand 21 zwischen zwei benachbarten ersten Unterstützungsstrukturen 5 (vgl. Fig. 1) entspricht dabei einem ersten Zwischenraum 22 (vgl. Fig. 3) zwischen zwei benachbarten Brennstäben 15 in der zweiten Querrichtung 17. Ein zweiter Abstand 23 zwischen zwei benachbarten zweiten Unterstützungsstrukturen 11 (vgl. Fig. 2) entspricht dabei einem zweiten Zwischenraum 24 in der ersten Querrichtung 17 (vgl. Fig. 3). Die Definition der Zwischenräume 22, 24 bezieht sich dabei auf Bereiche des Rasters, in denen Brennstäbe 15 einander direkt benachbart sind, also nicht die Bereiche des Rasters, in denen die Wasserstäbe 29 ausgebildet sind. Die Längen der Unterstützungstrukturen 5, 11 sind daher so gewählt, dass sie im verbauten Zustand die Wasserstäbe 29 aussparen. Wie oben bereits ausgeführt weisen die Unterstützungsstrukturen 5, 11 Noppen 30 auf, die die Brennstäbe 15 klemmen und fixieren. Die Noppen 30 sind dabei beidseits der jeweiligen Unterstützungsstrukturen 5, 11 ausgebildet und sind der Übersichtlichkeit halber nur teilweise mit Bezugszeichen versehen.

Die jeweiligen Grundkörper 2, 8 liegen außen an dem Brennelement 14 und damit an den äußeren Brennstäben 15 des Brennelements 14 an. Über die ersten Schnappmittel 4 und zweiten Schnappmittel 10 erfolgt, wie in Fig. 3 gezeigt, eine Fixierung an den Brennstäben 15, die in den Ecken des Rasters ausgebildet sind. Die ersten Schnappmittel 4 und die zweiten Schnappmittel 10 (vgl. Fig. 1 und 2) sind dabei so ausgebildet, dass sie in anderen Positionen in Längsrichtung 16 einen Kraft- und Formschluss mit den Brennstäben 15 eingehen.

Fig. 4 zeigt schematisch die zusammengebauten ersten Ertüchtigungsstruktursegmente 1 und zweiten Ertüchtigungsstruktursegmente 7. Zur Vermeidung von Wiederholungen wird auf die Beschreibung zu Fig. 3 verwiesen.

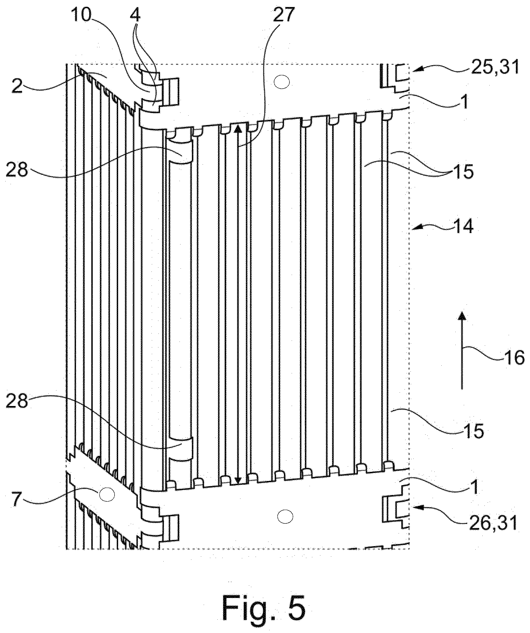

Fig. 5 zeigt schematisch ein Brennelement 14 mit Brennstäben 15. Diese weisen an einer ersten Position 25 in Längsrichtung 16 und an einer zweiten Position 26 in Längsrichtung 16 Ertüchtigungsstruktursegmente1, 7 auf, die in Längsrichtung 16 um eine Distanz 27 beabstandet ist. Die erste Position 25 und die zweite Position 26 entsprechen dabei Sollpositionen 31, an denen bei dem Brennelement 14 vor dem Auskasten Abstandshalter (nicht gezeigt) ausgebildet waren, die beim Auskasten abgerissen und nicht mehr vorhanden sind. Durch die Ausbildung der Ertüchtigungsstruktursegmente 1, 7 an der ersten Position 25 und der zweiten Position 26, erfolgt die Lagerung der Brennstäbe 15 in Längsrichtung 16 auslegungsgemäß, so dass auch bei dem ertüchtigten Brennelement 14 eine Störfallsicherheit gegeben ist, so dass unabhängig von einer Lageänderung des Brennelements 14 oder auch von einem Ereignis wie einem Sturz des Brennelementes 14 die Abstände der Brennstäbe 14 zueinander konstant bleiben, um eine Erhöhung der lokalen Konzentration an spaltbarem Material zu verhindern. Um die erste Position 25 und die zweite Position 26 zu fixieren, sind Distanzbleche 28 ausgebildet, die ein Verschieben der Ertüchtigungsstruktursegmente 1, 7 an der ersten Position 25 und der zweiten Position 26 und damit ein Verlassen der Sollpositionen 31 verhindern. Die Distanzbleche 28 werden bevorzugt ebenfalls über eine Schnappverbindung an Brennstäben 15 fixiert, um eine einfache Montage zu ermöglichen.

Grundkörper 2, 8 und jeweilige Unterstützungsstrukturen 5, 11 sind bevorzugt aus einem Blech oder durch einen additiven Fertigungsvorgang (3D-Druck) ausgebildet. Bevorzugt sind Grundkörper 2, 8 und jeweilige Unterstützungsstrukturen 5, 11 aus einer Nickel-Chrom-Eisen-Molybdän-Legierung, beispielsweise einer Legierung, die unter der Bezeichnung Alloy 718 vertrieben wird, oder einer Zirkoniumlegierung ausgebildet.

Im Rahmen des hier vorgestellten Verfahrens werden Ertüchtigungsstruktursegmente 1, 7 an einer oder mehreren Positionen 25, 26 in das Brennelement 14 eingebracht, um eine auslegungsgemäße Lagerung der Brennstäbe 15 des Brennelements 14 zu erreichen, die eine Fixierung der Brennstäbe 15 quer zu einer Längsrichtung 16, in der sich die Brennstäbe 15 erstrecken, erreicht, die eine Relativbewegung von Brennstäben 15 gegeneinander auch im Störfall verhindert. Dabei ist es nicht zwingend erforderlich, vorhandene defekte oder verschobene Abstandshalter zu entfernen. So können Brennelemente 14 für den Transport und/oder die Lagerung auf einfache Art und Weise ertüchtigt werden.

### Bezugszeichen

- 1: erstes Ertüchtigungsstruktursegment
- 2: erster Grundkörper
- 3: erste Positionierhilfe
- 4: erste Schnappmittel
- 5: erste Unterstützungsstruktur
- 6: Ausnehmung
- 7: zweites Ertüchtigungsstruktursegment
- 8: zweiter Grundkörper
- 9: zweite Positionierhilfe
- 10: zweite Schnappmittel
- 11: zweite Unterstützungsstruktur
- 12: Höhe
- 13: Erstreckung
- 14: Brennelement
- 15: Brennstab
- 16: Längsrichtung
- 17: zweite Querrichtung
- 18: erste Querrichtung
- 19: Spalte
- 20: Zeile
- 21: erster Abstand
- 22: erster Zwischenraum
- 23: zweiter Abstand
- 24: zweiter Zwischenraum
- 25: erste Position
- 26: zweite Position
- 27: Distanz
- 28: Distanzblech
- 29: Erste Seite
- 30: Noppen
- 31: Sollposition

## Patentansprüche

1. Verfahren zum Ertüchtigen eines bestehenden Brennelements (14) für Kernreaktoren, insbesondere Siedewasserreaktoren, zum Transport und/oder zur Lagerung,
wobei das Brennelement (14) aus einer Mehrzahl von Brennstäben (15) ausgebildet ist, die sich in einer Längsrichtung (16) erstrecken,
wobei die Brennstäbe (15) in einer Ebene senkrecht zur Längsrichtung (16) in Reihen (20) und Spalten (19) angeordnet sind,
wobei die Spalten (19) in einer ersten Querrichtung (18) angeordnet sind, die sich senkrecht zur Längsrichtung (16) erstreckt und die Reihen (20) in einer zweiten Querrichtung (17) angeordnet sind, die sich senkrecht zur Längsrichtung (16) und senkrecht zur ersten Querrichtung (18) erstreckt,
wobei das Brennelement (14) mit einem ersten Ertüchtigungsstruktursegment (1) und einem zweiten Ertüchtigungsstruktursegment (7) zum Lagern der Brennstäbe (15) versehen wird,
wobei das erste Ertüchtigungsstruktursegment (1) aus einem ersten Grundkörper (2) und mehreren ersten Unterstützungsstrukturen (5) ausgebildet ist, die sich zueinander parallel im rechten Winkel vom ersten Grundkörper (2) erstrecken,
wobei das zweite Ertüchtigungsstruktursegment (7) aus einem zweiten Grundkörper (8) und mehreren zweiten Unterstützungsstrukturen (11) ausgebildet ist, die sich zueinander parallel im rechten Winkel vom zweiten Grundkörper (8) erstrecken,
umfassend die folgenden Schritte:
a) Festlegen einer ersten Position (25) in Längsrichtung (16) zur Lagerung der Brennstäbe (15);
b) Einbringen eines ersten Ertüchtigungsstruktursegmentes (1) an der ersten Position (25), wobei die ersten Unterstützungsstrukturen (5) in der ersten Querrichtung (18) zwischen die Brennstäbe (15) geschoben werden und Einbringen eines weiteren ersten Ertüchtigungsstruktursegmentes (1) an der ersten Position (25), wobei die ersten Unterstützungsstrukturen (5) entgegen der ersten Querrichtung (18) zwischen die Brennstäbe (15) geschoben werden;
c) Einbringen eines zweiten Ertüchtigungsstruktursegmentes (7) an der ersten Position (25), wobei die zweiten Unterstützungsstrukturen (11) in der zweiten Querrichtung (17) zwischen die Brennstäbe (15) geschoben werden und Einbringen eines weiteren zweiten Ertüchtigungsstruktursegmentes (7) an der ersten Position (25), wobei die zweiten Unterstützungsstrukturen (11) entgegen der zweiten Querrichtung (17) zwischen die Brennstäbe geschoben werden.

2. Verfahren nach Anspruch 1, bei dem mindestens eine von der ersten Position (25) verschiedene zweite Position (26) in Längsrichtung (16) zur Lagerung der Brennstäbe (15) festgelegt wird und die Schritte b) und c) an den jeweiligen zweiten Positionen (26) durchgeführt werden.

3. Verfahren nach einem der vorhergehenden Ansprüche, bei dem das bestehende Brennelement (14) in Längsrichtung (16) Sollpositionen (31) für Abstandshalter aufweist und die erste Position (25) an einer Sollposition (31) oder unmittelbar in Längsrichtung (16) benachbart zu einer Sollposition (31) festgelegt wird.

4. Verfahren nach einem der Ansprüche 2 bis 3, bei dem das bestehende Brennelement (14) in Längsrichtung (16) Sollpositionen (31) für Abstandshalter aufweist und die zweite Position (25) an einer Sollposition (31) oder unmittelbar in Längsrichtung (16) benachbart zu einer Sollposition (31) festgelegt wird.

5. Verfahren nach einem der vorhergehenden Ansprüche, bei dem die ersten Unterstützungsstrukturen (5) Ausnehmungen (6) aufweisen, durch die die zweiten Unterstützungsstrukturen (11) beim Einschieben hindurchdringen.

6. Verfahren nach einem der vorhergehenden Ansprüche, bei dem die ersten Ertüchtigungsstruktursegmente (1) und/oder die zweiten Ertüchtigungsstruktursegmente (7) Abweiserfahnen (3, 9) aufweisen, die am jeweiligen Grundkörper (2, 8) ausgebildet sind.

7. Verfahren nach Anspruch 6, bei dem die Abweiserfahnen (3, 9) in Form von Metallzungen am Grundkörper (2, 8) ausgebildet sind.

8. Verfahren nach einem der vorhergehenden Ansprüche, bei dem der erste Grundkörper (2) erste Schnappmittel (4) aufweist, die beim Einschieben der ersten Ertüchtigungsstruktursegmente (1) eine Schnappverbindung mit Brennstäben (15) eingehen.

9. Verfahren nach einem der vorhergehenden Ansprüche, bei dem der zweite Grundkörper (8) zweite Schnappmittel (10) aufweist, die beim Einschieben der zweiten Ertüchtigungsstruktursegmente (7) eine Schnappverbindung mit Brennstäben (15) eingehen.

10. Verfahren nach einem der vorhergehenden Ansprüche, bei dem Distanzbleche (28) an Brennstäben (15) fixiert werden, die eine Verschiebung der ersten Ertüchtigungsstruktursegmente (1) und/oder der zweiten Ertüchtigungsstruktursegmente (7) in Längsrichtung (16) verhindern.

## Claims

1. Method for strengthening an existing fuel element (14) for nuclear reactors, in particular boiling-water reactors, for transport and/or storage purposes,
wherein the fuel element (14) is formed from a plurality of fuel rods (15) which extend in a longitudinal direction (16),
wherein the fuel rods (15) are arranged in rows (20) and columns (19) in a plane perpendicular to the longitudinal direction (16),
wherein the columns (19) are arranged in a first transverse direction (18), which extends perpendicularly to the longitudinal direction (16), and the rows (20) are arranged in a second transverse direction (17), which extends perpendicularly to the longitudinal direction (16) and perpendicularly to the first transverse direction (18),
wherein the fuel element (14) is provided with a first strengthening structure segment (1) and a second strengthening structure segment (7) for the storing of the fuel rods (15),
wherein the first strengthening structure segment (1) is formed from a first main body (2) and multiple first support structures (5), which extend from the first main body (2) at a right angle and parallel to one another,
wherein the second strengthening structure segment (7) is formed from a second main body (8) and multiple second support structures (11), which extend from the second main body (8) at a right angle and parallel to one another,
comprising the following steps:
a) defining a first position (25) in the longitudinal direction (16) for the storing of the fuel rods (15);
b) introducing a first strengthening structure segment (1) at the first position (25), wherein the first support structures (5) are pushed between the fuel rods (15) in the first transverse direction (18), and introducing a further first strengthening structure segment (1) at the first position (25), wherein the first support structures (5) are pushed between the fuel rods (15) counter to the first transverse direction (18);
c) introducing a second strengthening structure segment (7) at the first position (25), wherein the second support structures (11) are pushed between the fuel rods (15) in the second transverse direction (17), and introducing a further second strengthening structure segment (7) at the first position (25), wherein the second support structures (11) are pushed between the fuel rods counter to the second transverse direction (17);

2. Method according to Claim 1, in which at least one second position (26), different from the first position (25), is defined in the longitudinal direction (16) for the storing of the fuel rods (15), and steps b) and c) are carried out at the respective second positions (26).

3. Method according to either of the preceding claims, in which the existing fuel element (14) has in the longitudinal direction (16) desired positions (31) for spacers, and the first position (25) is defined at a desired position (31) or directly adjacent in the longitudinal direction (16) to a desired position (31).

4. Method according to either of Claims 2 and 3, in which the existing fuel element (14) has in the longitudinal direction (16) desired positions (31) for spacers, and the second position (25) is defined at a desired position (31) or directly adjacent in the longitudinal direction (16) to a desired position (31).

5. Method according to one of the preceding claims, in which the first support structures (5) have cutouts (6) through which the second support structures (11) pass during the pushing-in process.

6. Method according to one of the preceding claims, in which the first strengthening structure segments (1) and/or the second strengthening structure segments (7) have deflector tabs (3, 9) which are formed on the respective main body (2, 8).

7. Method according to Claim 6, in which the deflector tabs (3, 9) are in the form of metal tongues on the main body (2, 8).

8. Method according to one of the preceding claims, in which the first main body (2) has first snap-action means (4) which enter into a snap-fit connection with fuel rods (15) during the pushing-in process for the first strengthening structure segments (1).

9. Method according to one of the preceding claims, in which the second main body (8) has second snap-action means (10) which enter into a snap-fit connection with fuel rods (15) during the pushing-in process for the second strengthening structure segments (7).

10. Method according to one of the preceding claims, in which spacer sheets (28) are fixed to fuel rods (15) and prevent displacement of the first strengthening structure segments (1) and/or the second strengthening structure segments (7) in the longitudinal direction (16).

## Revendications

1. Procédé de renforcement d'un élément combustible (14) existant pour réacteurs nucléaires, en particulier des réacteurs à eau bouillante, pour le transport et/ou le stockage,
l'élément combustible (14) étant constitué d'une pluralité de barres de combustible (15) qui s'étendent dans une direction longitudinale (16),
les barres de combustible (15) étant disposées dans un plan perpendiculaire à la direction longitudinale (16) en rangées (20) et en colonnes (19),
les colonnes (19) étant agencées dans une première direction transversale (18) qui s'étend perpendiculairement à la direction longitudinale (16) et les rangées (20) étant agencées dans une seconde direction transversale (17) qui s'étend perpendiculairement à la direction longitudinale (16) et perpendiculairement à la première direction transversale (18),
l'élément combustible (14) étant pourvu d'un premier segment de structure de renforcement (1) et d'un second segment de structure de renforcement (7) pour le stockage des barres de combustible (15),
le premier segment de structure de renforcement (1) étant constitué d'un premier corps de base (2) et de plusieurs premières structures de support (5) qui s'étendent parallèlement les unes aux autres à angle droit par rapport au premier corps de base (2),
le second segment de structure de renforcement (7) étant constitué d'un second corps de base (8) et de plusieurs secondes structures de support (11) qui s'étendent parallèlement les unes aux autres à angle droit par rapport au second corps de base (8),
comprenant les étapes suivantes :
a) définition d'une première position (25) dans la direction longitudinale (16) pour le stockage des barres de combustible (15) ;
b) introduction d'un premier segment de structure de renforcement (1) à la première position (25), les premières structures de support (5) étant insérées entre les barres de combustible (15) dans la première direction transversale (18), et introduction d'un autre premier segment de structure de renforcement (1) à la première position (25), les premières structures de support (5) étant insérées entre les barres de combustible (15) en direction opposée à la première direction transversale (18) ;
c) introduction d'un second segment de structure de renforcement (7) à la première position (25), les secondes structures de support (11) étant insérées entre les barres de combustible (15) dans la seconde direction transversale (17), et introduction d'un autre second segment de structure de renforcement (7) à la première position (25), les secondes structures de support (11) étant insérées entre les barres de combustible en direction opposée à la seconde direction transversale (17).

2. Procédé selon la revendication 1, dans lequel au moins une seconde position (26) dans la direction longitudinale (16), différente de la première position (25), est définie pour le stockage des barres de combustible (15), et les étapes b) et c) sont réalisées aux secondes positions (26) respectives.

3. Procédé selon l'une quelconque des revendications précédentes, dans lequel l'élément combustible (14) existant présente des positions nominales (31) pour des espaceurs dans la direction longitudinale (16), et la première position (25) est définie à une position nominale (31) ou immédiatement adjacente à une position nominale (31) dans la direction longitudinale (16).

4. Procédé selon l'une quelconque des revendications 2 à 3, dans lequel l'élément combustible (14) existant présente, dans la direction longitudinale (16), des positions nominales (31) pour des espaceurs, et la seconde position (25) est définie à une position nominale (31) ou immédiatement adjacente à une position nominale (31) dans la direction longitudinale (16).

5. Procédé selon l'une quelconque des revendications précédentes, dans lequel les premières structures de support (5) présentent des évidements (6) à travers lesquels les secondes structures de support (11) pénètrent lors de l'insertion.

6. Procédé selon l'une quelconque des revendications précédentes, dans lequel les premiers segments de structure de renforcement (1) et/ou les seconds segments de structure de renforcement (7) présentent des languettes de déviation (3, 9) qui sont formées sur le corps de base (2, 8) respectif.

7. Procédé selon la revendication 6, dans lequel les languettes de déviation (3, 9) sont réalisées sous forme de languettes métalliques sur le corps de base (2, 8).

8. Procédé selon l'une quelconque des revendications précédentes, dans lequel le premier corps de base (2) présente des premiers moyens d'encliquetage (4) qui établissent une liaison par encliquetage avec les barres de combustible (15) lors de l'insertion des premiers segments de structure de renforcement (1).

9. Procédé selon l'une quelconque des revendications précédentes, dans lequel le second corps de base (8) présente des seconds moyens d'encliquetage (10) qui établissent une liaison par encliquetage avec les barres de combustible (15) lors de l'insertion des seconds segments de structure de renforcement (7).

10. Procédé selon l'une quelconque des revendications précédentes, dans lequel des plaques d'écartement (28) sont fixées sur les barres de combustible (15), celles-ci empêchant un déplacement des premiers segments de structure de renforcement (1) et/ou des seconds segments de structure de renforcement (7) dans la direction longitudinale (16).
